# EUROPEAN PATENT SPECIFICATION

(11) **EP 0 410 074 B1**
(45) Date of publication and mention of the grant of the patent: **15.12.1993**
(21) Application number: 90103148.4
(22) Date of filing: 19.02.1990
(51) Int. Cl.: F04C 29/00

(54) **Radial load reducing device, and sliding bearing and screw compressor using the device**
Anlage zum Verringern von Radialbelastung und diese umfassende Gleitlager und Schraubenverdichter
Dispositif réduisant la charge radiale et palier à friction et compresseur à vis utilisant le dispositif

(30) Priority: 28.07.1989 JP 197492/89
(43) Date of publication of application: 30.01.1991
(73) Proprietor: KABUSHIKI KAISHA KOBE SEIKO SHO also known as Kobe Steel Ltd., Kobe 651 (JP)
(72) Inventor: Yoshimura, Shoji, Hyogo-ken (JP)
(74) Representative: Tiedtke, Harro, Dipl.-Ing.

(56) References cited:
- EP-A- 0 007 409
- EP-A- 0 112 011
- EP-A- 0 310 292
- DE-A- 1 575 533
- DE-A- 3 817 312
- US-A- 4 310 203

## Description

The present invention relates to a radial load reducing device according to the preamble of claim 1, and also relates to a sliding bearing and a screw compressor using the above device.

According to the document EP-A-0 112 011 there is disclosed a radial load reducing device to be used in a bearing for gear pumps. In this device an oil groove or a second recess is located opposite to a high pressure fluid chamber or a first recess which lies within a critical zone of load concentration within a bearing bush. The second recess lies wholly outside the critical zone and provides a reservoir of fluid which reduces cavitations resulting from low pressures arising from radial movements of a shaft within the bush. A drawback of this solution is that the load applied to the rotating shaft supported by the sliding bearing cannot be very high.

It is the object of the present invention to provide a radial load reducing device by means of which the upper limit of the radial load to be applied to the rotating shaft can be increased, wherein said device can be used in a sliding bearing and in a screw compressor.

This object is achieved by means of the features defined in the characterizing part of claim 1. According to these features the oil groove faces a second outer circumferential portion of the rotating body, wherein the device further comprises a low-pressure fluid chamber defined to face substantially the first circumferential portion of the rotating body at the second position opposite to the first position, and a part of the low-pressure fluid chamber faces a third circumferential portion of the rotating body located between the first and the second circumferential portion. Therefore, the upper limit of the radial load to be applied by the sliding bearing in which this device is used, can be increased and the life of the bearing can be extended if the radial load is fixed, respectively.

The object is further achieved by a sliding bearing and a screw compressor using the above described radial load reducing device

In the following the invention is further illustrated by an embodiment with reference to the enclosed figures.
Fig. 1 is an elevational view of a sliding bearing;
Fig. 2 is a cross section taken along the line III-III in Fig. 1;
Fig. 3 is a partial cross section taken along the line IV-IV in Fig. 2;

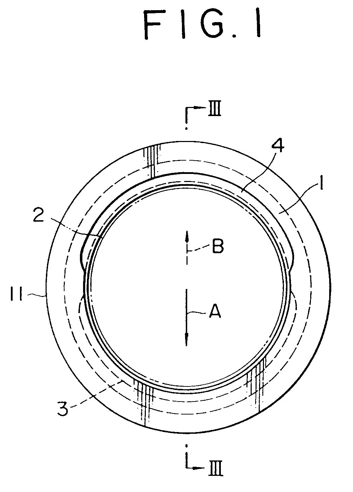

Figs. 1 to 3 show a radial load reducing device 1 applied to a rotating body formed as a shaft 2 and a sliding bearing 11 formed by employing this device.

A radial load is applied to the rotating shaft 2 in a direction depicted by a solid arrow A. A high-pressure fluid chamber 3 is defined to face a first outer circumferential portion of the rotating shaft 2 at a first position directed by the arrow A, and a low-pressure fluid chamber 4 is defined to face the same first outer circumferential portion of the rotating shaft 2 at a second position reversely directed by the arrow A. Reducing device 1 is formed by the high-pressure fluid chamber 3, a low-pressure fluid chamber 4 and an oil groove 13 for storing a lubricating oil, which is formed on the opposite side of the low-pressure fluid chamber 4 with respect to a wall portion 12.

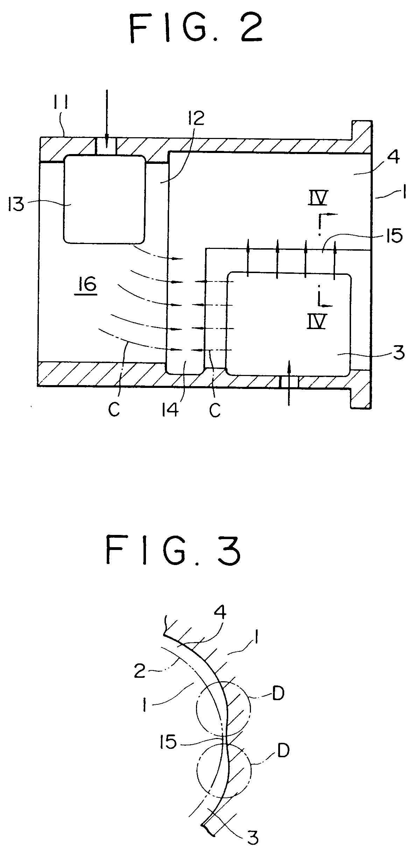

The low-pressure fluid chamber 4 is provided with a part forming an extending portion 14 for allowing the oil in the oil groove 13 and the high-pressure fluid chamber 3 to flow as shown by arrows C in Fig. 2.

With this construction, there is generated a force in a direction as depicted by a dotted arrow B in Fig. 1 counter to the direction A of application of the radial load to be applied to the rotating shaft 2, thereby reducing the radial load to be applied to the bearing 11.

It is preferable that a gap between the rotating shaft 2 and a boundary portion 15 between the high-pressure fluid chamber 3 and the low-pressure fluid chamber 4 should be greater than a gap between the rotating shaft 2 and an inner circumferential portion 16 of the extending portion 14 on the oil groove 13 side, so as to avoid the load from being applied to the boundary portion 15.

Further, it is preferable that the opposite ends of the gap as shown by circles D of dashed lines in Fig. 3 should be formed into a wedge shape so as to generate a hydraulic pressure.

The high-pressure fluid chamber 3 is filled with a pressure fluid such as oil or air having a suitable pressure, and the low-pressure fluid chamber 4 is filled with a pressure fluid having a pressure lower than that in the high-pressure fluid chamber 3, so that a force may be applied to the rotating shaft 2 in a direction as depicted by a dotted arrow B counter to the solid arrow A. Thus, the radial load to be applied to the rotating shaft 2 can be reduced by the device 1.

A radial bearing is classified into a rolling bearing and a sliding bearing. In general, the rolling bearing is used in case of a relatively low load, while the sliding bearing is used in case of a high load where the rolling bearing cannot be used. An energy loss of the sliding bearing is greater than that of the rolling bearing.

By the application of the device 1 to the rotating shaft 2, the rolling bearing and the sliding bearing can endure a higher load as compared with the case that the device 1 is not applied. Further, if the load is fixed, a longer life of the radial bearing can be expected.

The device 1 may be provided at a suitable position in the axial direction of the rotating shaft 2, that is, the position is not limited. For example, in the case that the fluid is oil, the device 1 may be provided at a shaft sealing portion of the rotating shaft 2. In this case, as a hydraulic pressure is applied to the shaft sealing portion to be sealed, a shaft sealing effect can also be improved.

A screw compressor may be formed by using the device 1. Accordingly, the compressor may be operated under a higher pressure owing to the extension of the life of the bearing and the expansion of the applicable load range.

## Claims

1. A radial load reducing device (1) comprising
- a high-pressure fluid chamber (3) defined to face a first outer circumferential portion of a rotating body (2) at a first position whereto a radial load to be applied to said rotating body is directed;
- an oil groove (13) for storing fluid defined to face said rotating body (2) at a second position opposite to said first position,
**characterized in that**
- said oil groove (13) faces a second outer circumferential portion of said rotating body (2) and
- said radial load reducing device (1) further comprises a low-pressure fluid chamber (4) defined to face substantially said first circumferential portion of said rotating body (2) at said second position opposite to said first position, wherein
- a part (14) of said low-pressure fluid chamber (4) faces a third circumferential portion of said rotating body (2) located between said first and said second circumferential portion.

2. A sliding bearing (11) using a radial load reducing device (1) according to claim 1.

3. A screw compressor using a radial load reducing device (1) according to claim 1.

## Patentansprüche

1. Anordnung zur Verringerung von Radialbelastung (1), mit
- einer Hochdruck-Fluidkammer (3), die derart ausgebildet ist, daß sie einem ersten äußeren Umfangsabschnitt eines Rotationskörpers (2) in einer ersten Position gegenüberliegt, auf die eine Radialbelastung, die auf den Rotationskörper (2) aufgebracht wird, gerichtet ist;
- einer Ölnut (13) zur Fluidspeicherung, die derart ausgebildet ist, daß sie dem Rotationskörper (2) in einer zweiten Position, die der ersten Position gegenüberliegt, zugewandt ist,
dadurch gekennzeichnet, daß
- die Ölnut (13) einem zweiten äußeren Umfangsabschnitt des Rotationskörpers (2) gegenüberliegt und daß
- die Anordnung zur Verringerung von Radialbelastung (1) eine Niederdruck-Fluidkammer (4) hat, die derart ausgebildet ist, daß sie im wesentlichen dem ersten Umfangsabschnitt des Rotationskörpers (2) in der zweiten Position, die der ersten Position gegenüberliegt, zugewandt ist,
- ein Teil (14) der Niederdruck-Fluidkammer einem, sich zwischen dem ersten und zweiten Umfangsabschnitt befindenden, dritten Umfangsabschnitt des Rotationskörpers (2) zugewandt ist

2. Gleitlager (11), in dem eine Anordnung zur Verringerung von Radialbelastung (1) gemäß Anspruch 1 verwendet ist.

3. Schraubenverdichter, in dem eine Anordnung zur Verringerung von Radialbelastung (1) gemäß Anspruch 1 verwendet ist.

## Revendications

1. Dispositif de réduction de charge radiale (1), comprenant :
- une chambre à fluide à haute pression (3), définie pour être en regard d'une première partie circonférentielle extérieure d'un corps tournant (2), en une première position, en vue de l'application d'une charge radiale audit corps tournant;
- une gorge à huile (13), destinée à stocker un fluide, définie pour être en regard dudit corps tournant (2), en une seconde position opposée à ladite première position,
caractérisé en ce que
- ladite gorge à huile (13) est en regard d'une seconde partie circonférentielle dudit corps tournant (2), et
- ledit dispositif de réduction de charge radiale (1) comprend en outre une chambre à fluide à basse pression (4), définie pour être en regard pratiquement de ladite première partie circonférentielle dudit corps tournant (2), en ladite seconde position opposée à ladite première position, dans lequel
- une partie (14) de ladite chambre à basse pression (4) est en regard d'une troisième partie circonférentielle dudit corps tournant (2), située entre lesdites première et seconde partie circonférentielles.

2. Palier à glissement (11) utilisant un dispositif de réduction de charge radiale (1) selon la revendication 1.

3. Compresseur à vis utilisant un dispositif de réduction de charge radiale (1) selon la revendication 1.
